# EUROPÄISCHE PATENTSCHRIFT

(11) **EP 2 187 510 B1**
(45) Veröffentlichungstag und Bekanntmachung des Hinweises auf die Patenterteilung: **03.08.2016**
(21) Anmeldenummer: 08019975.5
(22) Anmeldetag: 15.11.2008
(51) Int. Cl.: H02M 1/36, H02J 3/38, H02M 1/00, H02M 7/48

(54) **Stromrichteranlaufschaltung**
Inverter start up switch
Circuit de démarrage d'un convertisseur de courant

(43) Veröffentlichungstag der Anmeldung: 19.05.2010
(73) Patentinhaber: SMA Solar Technology AG, 34266 Niestetal (DE)
(72) Erfinder: Falk, Andreas, 34131 Kassel (DE)
(74) Vertreter: Lahnor, Peter

(56) Entgegenhaltungen:
- EP-A- 1 244 203
- EP-A- 1 463 188
- EP-A- 1 852 963
- EP-A- 1 870 996
- EP-A- 1 914 857
- DE-U1-202006 001 063
- JP-A- 11 312 022

## Beschreibung

Die Erfindung betrifft eine Stromrichteranordnung nach dem Oberbegriff des Anspruches 1 und ein Verfahren nach dem Oberbegriff des Anspruches 7.

Es ist bekannt, für einen Solar- bzw. Photovoltaikgenerator hoher Ausgangsspannung einen ein- oder dreiphasigen Stromrichter zu verwenden, der die Gleichspannung der Quelle in eine netzkonforme Wechselspannung umwandelt. Dem Generator ist üblicherweise ein Zwischenkreis-Kondensator nachgeschaltet. Diesem folgt der Stromrichter. Am Ausgang des Stromrichters ist ein Sinusfilter geschaltet. Über einen Trafo wird in das Energieversorgungsnetz eingespeist.

Beim Anlauf von Photovoltaik-Anlagen ist die hohe Leerlaufspannung des Generators problematisch. Im Leerlauf weist der Solargenerator eine hohe Ausgangsspannung auf. Die Leerlaufspannung ist i.d.R. mehr als 20% höher als im Arbeitspunkt bei Einspeisung, der sogenannten MPP-Spannung (Maximum Power Point). Beim MPP-Tracking wird ein Generator-Arbeitspunkt optimaler Leistung eingestellt. Die höhere Generatorspannung im Leerlauf darf nicht zur Schädigung der Elektronik im Anlauf führen.

Bekannt sind außerdem Zusatzbeschaltungen, wie z.B. ein Widerstands-Chopper. Dieser ist parallel zum DC-Zwischenkreis bzw. parallel zum Eingang des Stromrichters angeschlossen und verringert die Zwischenkreisspannung während der Anlaufphase. Von Nachteil sind dabei die hohen Verluste in der Anlaufphase bzw. die hohe Belastung des Widerstands-Choppers.

Eine andere in der DE 20 2006 001 063 U1 beschriebene Lösung schaltet dem dreiphasigen Stromrichter einen Tiefsetzsteller vor. Der Tiefsetzsteller setzt hier die Photovoltaik-Generatorspannung im Bedarfsfall auf einen zulässigen Wert hinunter. Von Nachteil ist, dass bei niedriger Generator-Spannung der Schalter des Tiefsetzstellers permanent geschlossen sein muss. Dies führt zu erheblichen Durchlassverlusten. Zudem müssen Schalter und die Diode des Tiefsetzstellers für die maximale Generator-Spannung, d.h. für die Leerlaufspannung ausgelegt werden. Dadurch sind Bauteile höherer Spannungsfestigkeit erforderlich als bei Betrieb nur im MPP-Arbeitspunkt. Diese Bauteile sind teurer und weisen höhere Verlustleistungen auf. Gemäß der DE 20 2006 001 063 U1 werden die Schalter des dreiphasigen Stromrichters mit Netzfrequenz getaktet. Dies ist von Nachteil, weil kein sinusförmiger Strom eingespeist wird. Die JP 11-312022A offenbart eine Schaltung gemäß dem Oberbegriff des Anspruchs 1 und dem in Abbildung 7 gezeigten Beispiel, welches nicht unter den Schutzumfang der Ansprüche fällt.

Der Erfindung liegt die Aufgabe zugrunde, eine Stromrichteranordnung mit einer alternativen

Zusatzschaltung für den Anlauf eines Stromrichters für einen PV-Generator mit hoher Leerlaufspannung zu schaffen, die sich durch hohe Zuverlässigkeit, aber auch geringe Verluste sowohl während des Anlaufs als auch während des Einspeisebetriebs im MPP-Punkt auszeichnet.

Diese Aufgabe wird durch die kennzeichnenden Merkmale des unabhängigen Anspruches 1 gelöst.

Die Aufgabe wird also durch eine Zusatzschaltung gelöst, die nur während der Anlaufphase wirksam ist und die Spannung am Stromrichtereingang während der Anlaufphase reduziert. Wenn die Leerlaufspannung des Photovoltaik-Generators größer als die Stromrichterspannung ist, dann begrenzt die Zusatzschaltung, die praktisch als eine Hilfsschaltung ausgeführt ist, die Stromrichterspannung so lange, bis der Stromrichter die Photovoltaik-Anlage so belastet, dass die MPP-Spannung erreicht und die Stromrichterspannung im MPP-Arbeitspunkt nicht überschritten wird. Der Vorteil besteht darin, dass kein Chopper für die Nennleistung erforderlich ist. Erfindungsgemäß ist die Zusatzschaltung vorzugsweise während der Anlaufphase aktiv. Die Schaltung kann aber auch bei Netzspannungseinbrüchen oder beim Modus "Leistungsbegrenzung" aktiv sein. Der Erfindung liegt der Gedanke zugrunde, dass die am Eingang des Stromrichters anliegende Spannung durch einen Spannungsteiler reduziert wird. Wird ein Spannungsteiler verwendet, ist der Hauptstromrichter mit nur einem Teil des Spannungsteilers verbunden. Dadurch ist die anliegende Spannung sowie die umgesetzte Leistung in diesem Betriebspunkt viel kleiner als im Einspeisebetrieb.

Der Vorteil der Erfindung besteht darin, dass Halbleiter des Stromrichters nicht mehr für eine maximal mögliche Generatorspannung ausgelegt sein müssen, d.h. es können Bauteile geringerer Spannungsfestigkeit eingesetzt werden, was die Schaltungskosten senkt. Bauteile geringerer Spannungsfestigkeit haben auch häufig geringere Verluste, so dass der Wirkungsgrad im MPP-Punkt verbessert wird. Die Halbleiter des Stromrichters, und zwar einer Brückenschaltung und/oder eines Hochsetzstellers, sind nicht für eine Leerlaufspannung, sondern für einen MPP-Arbeitspunkt ausgelegt.

Hierbei ist ein Verfahren vorgesehen, bei dem die Ausgangsspannung des Hauptstromrichters während der Anlaufphase mit der Netzspannung synchronisiert wird und der Hauptstromrichter nach erfolgter Synchronisation mit Hilfe von AC-Schaltorganen mit dem Netz verbunden wird.

Zwischen dem Photovoltaik-Generator und dem Zwischenkreis-Kondensator befindet sich zweckmäßigerweise ein DC-Schaltorgan. Zwischen z. B. einem Sinusfilter und einem Trafo befindet sich vorzugsweise ein AC-Schaltorgan. Die Schaltorgane sind vorzugsweise als Schütze ausgeführt. Beim Anlauf der Anlage wird zunächst das DC-Schaltorgan geschlossen. Dann wird der Stromrichter aktiviert, d.h. die Schalter des Stromrichters beginnen zu takten. Die Ausgangsspannung des Stromrichters wird nun mit der Netzspannung synchronisiert. Ist die Stromrichter-Ausgangsspannung netzsynchron, werden die AC-Schaltorgane geschlossen, und der Stromrichter speist in das Netz ein. Voraussetzung ist, dass der Photovoltaik-Generator ausreichend Leistung zur Verfügung stellt.

Weitere vorteilhafte Ausgestaltungen der Erfindung sind in den Unteransprüchen gekennzeichnet.

Um das Problem von Durchlassverlusten eines Tiefsetzstellers zu lösen oder einen Spannungsteiler zu deaktivieren, ist es in nicht erfindungsgemäßer Weise und wie in JP 11-312022A offenbart möglich, dass die Zusatzschaltung mit einem Schalter, insbesondere mit einem Überbrückungsschalter, verbunden ist, der während der Anlaufphase geöffnet und nach der Anlaufphase geschlossen ist und in einem Strompfad zwischen dem Generator und dem Hauptstromrichter liegt sowie parallel zu mindestes einem Bauelement der Zusatzschaltung angeschlossen ist. Grundsätzlich kann beispielsweise an dem Spannungsteiler ein Halbleiterelement angeschlossen sein, das ein Bauelement des Teilers so überbrückt, dass keine Teilung erfolgt. Besonders günstig ist es jedoch, wenn der Überbrückungsschalter ein mechanischer Schalter, insbesondere ein Schütz oder ein Relais ist. An den geschlossenen Schütz- oder Relaiskontakten findet im Gegensatz zu einem Halbleiter kein Spannungsabfall statt, so dass keine Verluste entstehen.

Daher werden Durchlassverluste gegenüber der in der DE 20 2006 001 063 U1 beschriebenen Lösung vermieden, wenn der Überbrückungsschalter mindestens einen Tiefsetzsteller-Schalter überbrückt, wobei nur der Tiefsetzsteller-Schalter allein oder zusammen mit einer in Reihe liegenden Drossel kurzgeschlossen werden kann.

Ein derartiger, nicht erfindungsgemäßer Überbrückungsschalter für einen Dc/Dc Steller in einem PV Wechselrichter ist beispielsweise aus der EP 1852963 A1 bekannt. 20 Erfindungsgemäß wird ein parallel zum Generator angeordneter kapazitiver Spannungsteiler verwendet. Es erfolgt eine Spannungsteilung zwischen der Spannung über der Zusatzschaltung und der Eingangsspannung des Hauptstromrichters, so dass nicht die volle Leerlaufspannung am Hauptstromrichter anliegt, sondern z.B. nur 80%. Eine Spannungsteilung erfolgt nur während der Anlaufphase, wenn der Überbrückungsschalter während des eingestellten MPP-Arbeitspunktes, d.h. im Dauerbetrieb, einen Teil des Spannungsteilers überbrückt.

Es ist vorgesehen, dass die Zusatzschaltung als kapazitiver Spannungsteiler einen ersten Kondensator und einen in Reihe geschalteten Zwischenkreiskondensator enthält, wobei der Überbrückungsschalter in Reihe mit dem Hauptstromrichter angeschlossen ist. Der Vorteil von Kondensatoren gegenüber ohmschen Widerständen ist, dass Energie in den Kondensatoren gespeichert und nicht in Verlustwärme umgewandelt wird, so dass einerseits keine Aufheizung der Schaltung erfolgt und andererseits der Wirkungsgrad verbessert wird.

Die gespeicherte Energie wird vorzugsweise über einen Hilfsstromrichter oder über einen DC-DC-Wandler zurückgewonnen.

Daher umfasst die Zusatzschaltung in einer Ausführungsform der Erfindung einen Hilfsstromrichter, insbesondere mit kleinerer Leistung als der Hauptstromrichter, wobei dieser nur während Anlaufphase aktiv ist. Zweckmäßigerweise ist der Hilfsstromrichter unmittelbar an das Netz angeschlossen, so dass dieser direkt in das Netz einspeist. Der Hilfsstromrichter hat die Funktion einer Last. Die Synchronisation muss daher früher erfolgen als im Hauptstromrichter. Auch ist es wichtig, auf eine MPP-Regelung im Hilfsstromrichter zu verzichten, um die Funktion zu erfüllen. Der Hilfsstromrichter hat vorzugsweise auch keinen Hochsetzsteller. Durch diese verhältnismäßig kostengünstige Lösung geht relativ wenig Energie während eines Anlaufs verloren, so dass der DC/AC-Wechselrichter im Anlauf einen hohen Wirkungsgrad aufweist.

Grundsätzlich kann der Hilfsstromrichter nicht nur während des Anlaufs eingesetzt werden. So ist vorstellbar, dass dieser auch bei seltenen Spannungsspitzen, z.B. im Sommer, aufgrund besonders hoher Sonneneinstrahlung eingesetzt wird.

Alternativ kann die Zusatzschaltung einen Widerstands-Chopper umfassen, der ebenfalls eine Last darstellt.

Eine weitere Alternative besteht in dem erwähnten DC-DC-Wandler. Dieser ist mit galvanischer Trennung ausgeführt. Sein Ausgang ist auf den Zwischenkreiskondensator zurückgekoppelt, so dass die Ladung des ersten Kondensators auf den Zwischenkreiskondensator umgepumpt wird.

Anstelle eines kapazitiven Spannungsteilers ist es in nicht erfindungsgemäßer Weise auch möglich, dass parallel zum Generator ein ohmscher Spannungsteiler angeschlossen wird, wobei eine Spannungsteilung zwischen einem ersten Reihenwiderstand und einem parallel zum Hauptstromrichter liegenden zweiten Reihenwiderstand erfolgt. Eine Spannungsteilung ist nur während der Anlaufphase wirksam. Dies hat den Vorteil, dass keine zusätzliche Last benötigt wird und wenige Bauelemente eingesetzt werden müssen. Um den Teiler nach dem Anlauf abzuschalten, ist es besonders günstig, wenn parallel zum ersten Reihenwiderstand der Überbrückungsschalter und in Reihe zum zweiten Reihenwiderstand, aber noch parallel zum Hauptstromrichter, ein weiterer Schalter, insbesondere ein mechanischer Schalter, vorzugsweise ein Relais oder ein Schütz, angeschlossen ist. Während eines eingestellten MPP-Arbeitspunktes fließt in den Widerständen somit kein Strom.

Damit die zulässige Spannung der Wechselrichter-Halbleiter nicht überschritten werden kann, ist es vorteilhaft, wenn ein Pulsmuster der Ansteuersignale, beispielsweise hochfrequente Signale, für Halbleiterschalter des Hauptstromrichters beim Zuschalten des Überbrückungsschalters so eingestellt wird, dass der Photovoltaik-Generator so stark belastet wird, dass die DC-Quellspannung des Generators auf einen Wert zusammenbricht, der höchstens der maximalen MPP-Spannung entspricht. Ein Pulsmuster kann ein PWM-Muster oder auch ein Rechteckmuster entsprechend der Netzfrequenz sein. Halbleiterschalter einer Halb- oder Vollbrücke können z.B. auch kurzzeitig überlappend geschlossen sein, um den Generator zusätzlich zu belasten und um eine hohe Generatorspannung zu vermeiden.

Ein Ausführungsbeispiel wird anhand der Zeichnungen näher erläutert, wobei weitere vorteilhafte Weiterbildungen der Erfindung und Vorteile derselben beschrieben sind.

Es zeigen:
- Fig. 1: eine Darstellung eines allgemeinen Aufbaus einer Photovoltaikanlage mit einem Widerstands-Chopper als Zusatzschaltung,
- Fig. 2: ein Spannungs-Zeigerdiagramm mehrerer Spannungen,
- Fig. 3: ein nicht erfindungsgemäßes Beispiel mit einem Tiefsetzsteller,
- Fig. 4: ein Ausführungsbeispiel mit einem Hilfsstromrichter,
- Fig. 5: ein Ausführungsbeispiel mit einem Widerstands-Chopper,
- Fig. 6: ein Ausführungsbeispiel mit einem DC-DC-Wandler, und
- Fig. 7.: ein nicht erfindungsgemäßes Beispiel mit einem ohmschen Spannungsteiler.

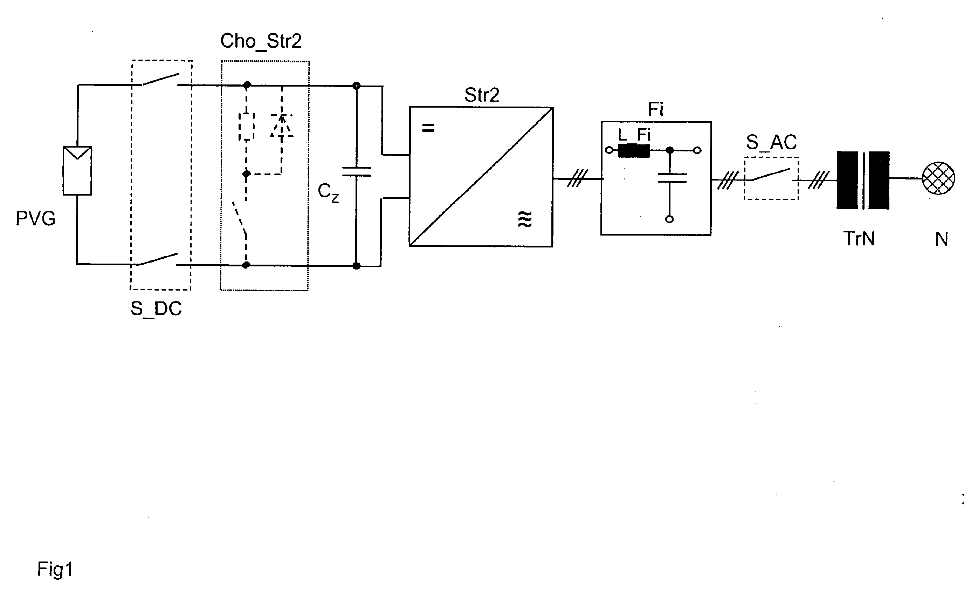

Fig. 1 zeigt ein Prinzipschaltbild eines Solar- bzw. Photovoltaikgenerators PVG mit einer Leerlauf-Ausgangsspannung von z.B. 250 - 3000 Volt, insbesondere 1000 - 1700 Volt. Dieser ist an einen dreiphasigen Stromrichter angeschlossen, der auch einphasig sein kann. Der Stromrichter Str2 wandelt die Gleichspannung des Generators PVG in eine netzkonforme Wechselspannung von z.B. 230/400V Volt, 50 Hz oder 60 Hz um.

Der Stromrichter hat im Wesentlichen z.B. einen Hochsetzsteller und/oder Tiefsetzsteller, eine netzsynchrone Halb- oder Vollbrückenschaltung und eine MPP-Regelung, wobei dieser mit einem Transformator ausgeführt oder transformatorlos sein kann. Derartige Stromrichterschaltungen sind bekannt und müssen daher nicht näher erläutert werden. Es können auch bipolare Zwischenkreise und/oder zwei oder mehr Generatoren in Reihe geschaltet sein, so dass +, GND, - entsteht.

Dem Generator PVG ist ein Zwischenkreis-Kondensator CZ nachgeschaltet. Diesem folgt der Stromrichter Str2. Am Ausgang des Stromrichters Str2 ist ein Sinusfilter Fi geschaltet. Über einen Trafo TrN wird in das Energieversorgungsnetz N eingespeist. Eine Einspeisung ohne Trafo TrN ist aber auch möglich.

Zwischen dem Generator PVG und dem Zwischenkreis-Kondensator CZ befindet sich ein Schaltmittel bzw. ein DC-Schaltorgan S_DC. Dieses weist einen im Pluspfad liegenden ersten Schalter und einen im Minuspfad liegenden zweiten Schalter auf, so dass eine galvanische Trennung bestehen kann. Zwischen Sinusfilter Fi und Trafo TrN befindet sich ein weiteres Schaltmittel bzw. AC-Schaltorgan S_AC. Dieses weist drei oder vier Schalter für L1 - L3 und ggf. für einen N-Leiter auf, so dass auch hier eine galvanische Trennung bestehen kann. Die Schaltorgane S_DC, S_AC sind vorzugsweise als Schütze ausgeführt.

Beim Anlauf der Anlage wird zunächst das DC-Schaltorgan S_DC geschlossen. Dann wird der Stromrichter Str2 aktiviert, d.h. die Schalter des Stromrichters beginnen zu takten. Die Ausgangsspannung des Stromrichters Str2 wird nun mit der Netzspannung synchronisiert. Ist die Stromrichter-Ausgangsspannung netzsynchron, wird das AC-Schaltorgan S_AC geschlossen, und der Stromrichter Str2 speist in das Netz N ein. Voraussetzung ist, dass der Generator PVG ausreichend Leistung zur Verfügung stellt.

Im Leerlauf weist der Generator, der kristalline oder amorphe Zellen haben kann, eine Ausgangsspannung auf, die z.B. 15 - 30%, vorzugsweise etwa 20% höher als im Arbeitspunkt bei Einspeisung bzw. der MPP-Spannung ist. Die Leerlaufspannung entsteht, wenn das DC-Schaltorgan S_DC offen ist.

Eine Zusatzschaltung, wie z.B. ein Widerstands-Chopper Cho_Str2 parallel zum DC Zwischenkreis bzw. parallel zum Eingang des Stromrichters, würde zwar im Sinne der Erfindung die Generatorspannung bei geschlossenem DC-Schaltorgan auf einen Wert verringern, der nicht höher als die MPP-Spannung ist. Nachteilig sind jedoch die hohen Verluste in der Anlaufphase bzw. die hohe Bauleistung des Widerstands-Choppers.

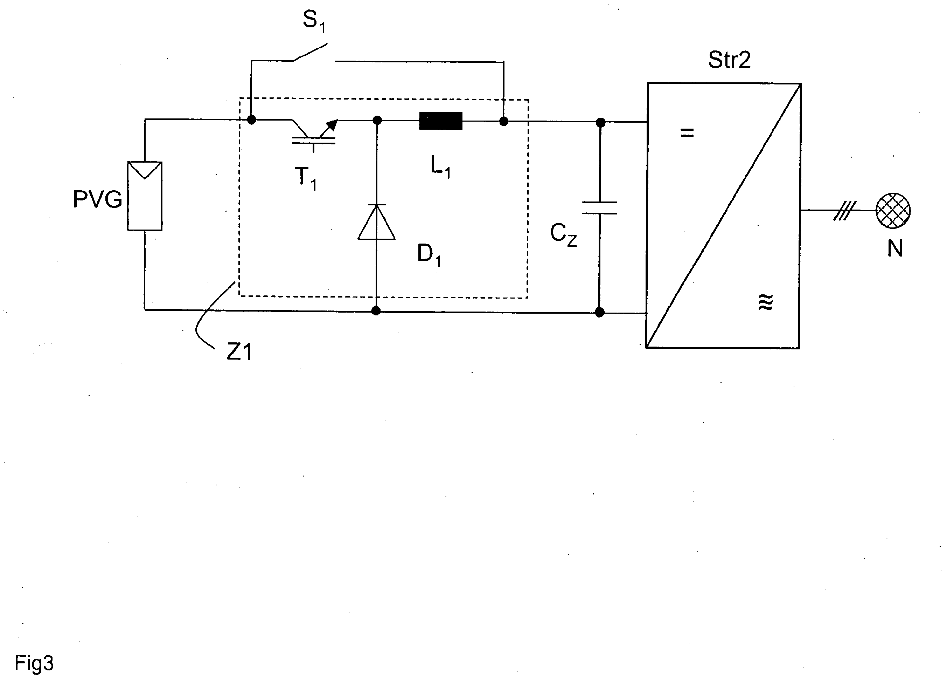

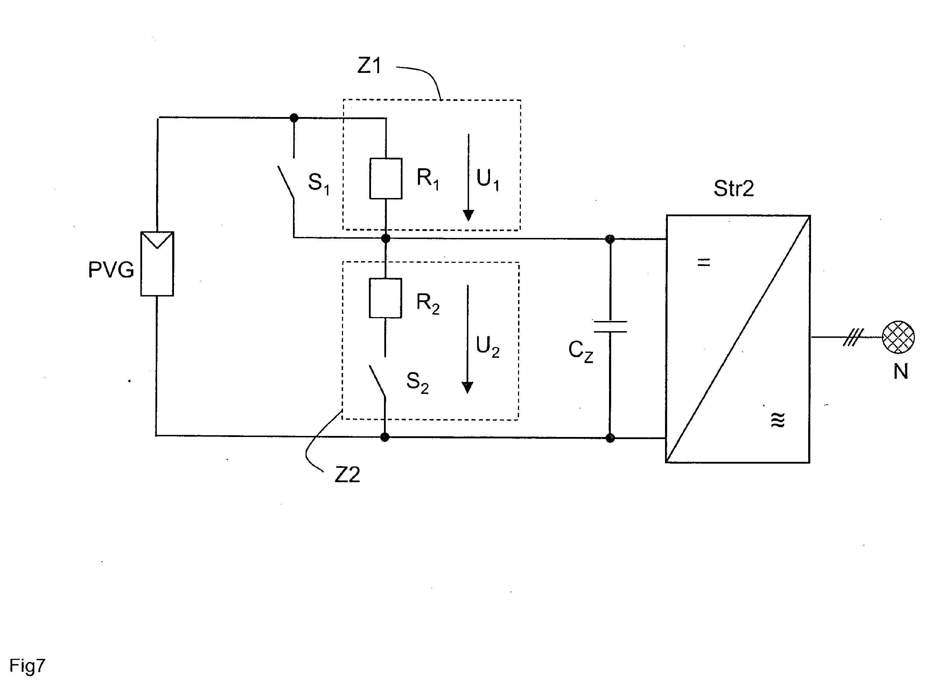

Die bevorzugte Zusatzschaltung nach der Erfindung bzw. ein Teil der Zusatzschaltung Z1 gemäß den Figuren 3 bis 7 wird überbrückt, wenn die Synchronisation des Hauptstromrichters Str2 mit dem Netz N abgeschlossen ist und Leistung ins Netz N eingespeist werden kann. Wird beispielsweise ein Spannungsteiler als Zusatzschaltung Z1 bzw. Z1 und Z2 (Fig. 7) eingesetzt, wird der nicht dem Hauptstromrichter Str2 zugeordnete Teil des Spannungsteilers überbrückt, wenn die Synchronisation des Hauptstromrichters mit dem Netz N abgeschlossen ist und Leistung ins Netz N eingespeist werden kann.

Die Ansteuerung des Hauptstromrichters Str2 erfolgt so, dass ein Pulsmuster im Moment, in dem die Zusatzschaltung deaktiviert wird, beibehalten wird, damit der Generator PVG stark genug belastet wird, damit die Spannung deutlich kleiner als die Leerlaufspannung ist. Danach erfolgt der Übergang in den normalen Einspeisebetrieb. Dabei ist grundsätzlich zu beachten, dass, wenn der Stromrichter Str2 synchron zum Netz arbeitet, der Strom und damit die Leistung vom Spannungsabfall über der Sinusfilterdrossel LFi abhängig sind. Da die Zeiger von Netz- und Drosselspannung senkrecht aufeinander stehen, wenn mit einem Leistungsfaktor nahe dem Wert 1 eingespeist wird, haben kleine Änderungen der Stromrichter-Ausgangsspannung eine große Spannungsänderung an der Drossel L zur Folge.

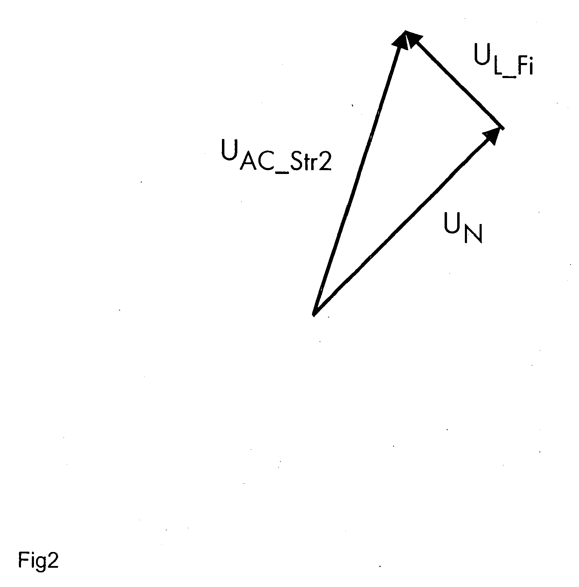

Fig. 2 zeigt das Zeigerdiagramm mit Netzspannung UN, Filterdrosselspannung UL_Fi und Stromrichterausgangsspannung UAC_Str2.

Wird das Pulsmuster des Stromrichters Str2 konstant gehalten und steigt die DC-Zwischenkreisspannung stark an, dann erhöht sich der Strom und damit die Leistung am Ausgang des Stromrichters Str2. Die Spannung des Generators PVG wird dann auf einen bestimmten Wert zusammenbrechen, sobald die hochohmige Entkopplung überbrückt ist. Das heißt, die Regelung muss so eingestellt werden, dass eine ausreichende Belastung des PV-Generators nach dem Schließen von S1 sichergestellt ist.

Fig. 3 zeigt eine nicht erfindungsgemäße Ausgestaltung einer Stromrichteranordnung. Dem Stromrichter Str2 ist die Zusatzschaltung Z1 vorgeschaltet. Diese Zusatzschaltung Z1 entspricht einem Tiefsetzsteller mit einem Schalter T1, einer in Reihe liegenden Drossel L1 und einer Diode D1, die am Verknüpfungspunkt beider Elemente T1 und L1 gegen Minus in Sperrrichtung angeschlossen ist. Der Schalter T1 und ggf. auch die Drossel L1 des Tiefsetzstellers können mit einem zusätzlichen Überbrückungsschalter S1, z.B. einem mechanischen Schalter, überbrückt werden. Der Tiefsetzsteller setzt die Generator-spannung auf einen für die Halbleiter des Stromrichters Str2 zulässigen Spannungs-Wert hinunter.

Von Vorteil ist, dass im Tiefsetzstellerbetrieb eine minimale Verlustleistung anfällt. Der Tiefsetzsteller arbeitet so, dass am Kondensator CZ eine Spannung anliegt, die kleiner oder gleich der maximal zulässigen MPP-Spannung ist. Da kein Widerstand vorhanden ist, fallen keine ohmschen Verluste an.

Im Gegensatz zum Stromrichter sind die Halbleiterbauteile, d.h. der Schalter T1 und die Diode D1, für die volle Leerlaufspannung auszulegen, beispielsweise müssen 1700V-Halbleiter verwendet werden, während die zulässige Sperrspannungsfestigkeit der Halbleiter des Stromrichters niedriger ist.

Der Schalter S1 kann auch ein Wahlschalter bzw. Umschalter sein, der entweder z.B. einen Eingang des Stromrichters Str2 mit dem Tiefsetzsteller oder direkt mit dem Generator PVG verbindet.

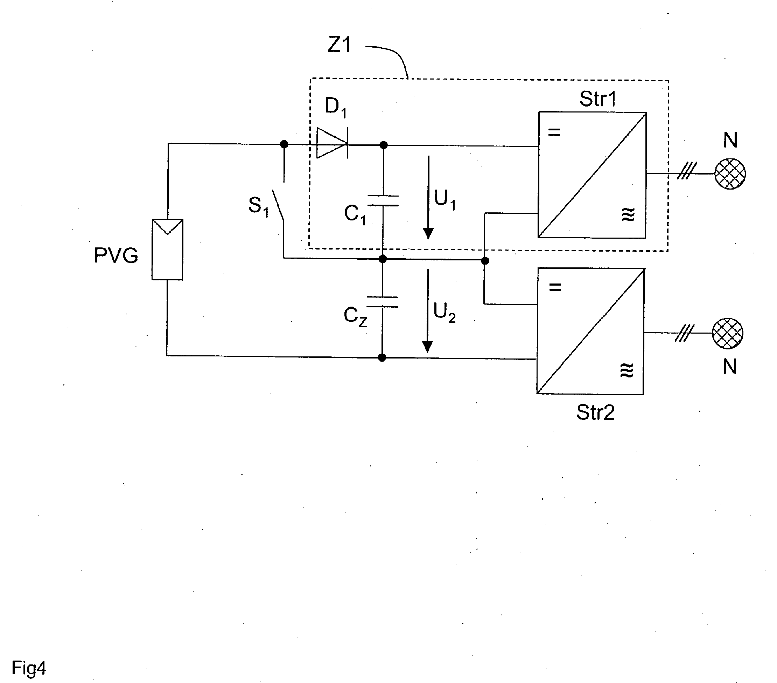

Fig. 4 zeigt eine erste Ausgestaltung der Erfindung mit einem kapazitiven Spannungsteiler mit zwei in Reihe geschalteten Kapazitäten C1 und CZ mit zwei Stromrichtern Str1 und Str2. Die Zusatzschaltung Z1 besteht aus einer Diode D1, einem Kondensator C1 und einem Stromrichter Str1. Die Kapazitäten C1 und CZ werden dabei so verschaltet, dass sie wie ein kapazitiver Spannungsteiler wirken. Jeder Kapazität C1 bzw. CZ ist ein Stromrichter Str1 bzw. Str2 parallel nachgeschaltet. Die Kapazität C1 kann durch einen Überbrückungsschalter S1 wirksam geschaltet oder überbrückt werden. In einem Strompfad ist zwischen dem Überbrückungsschalter S1 und dem ersten Kondensator C1 eine Diode in Durchlassrichtung angeschlossen. Diese Diode D1 verhindert einen Stromfluss in Richtung des Schalters S1 und ist so angeordnet, dass sie nur bei geöffnetem Überbrückungsschalter S1 stromdurchflossen ist..

In der Synchronisationsphase ist der Schalter S1, beispielsweise ein mechanischer Schalter, offen. Beide Stromrichter Str1 und Str2 werden angesteuert. Dann wird die Leistung zwischen den Eingangsspannungen U1 und U2 der Stromrichter Str1 und Str2 so aufgeteilt, dass die Spannung U2 einen Wert annimmt, der ein vorgegebenes Maximum nicht übersteigt. Die Diode D1 verhindert dann einen Stromfluss in Richtung des Generators PVG.

Die Ansteuerung des Hauptstromrichters Str2 erfolgt so, dass ein Pulsmuster im Moment, wo der eine Teil des Spannungsteilers überbrückt wird, beibehalten wird, damit der Generator PVG stark genug belastet wird, damit die Spannung deutlich kleiner als die Leerlaufspannung ist. Die Spannung U2 entspricht der Eingangsspannung des Stromrichters Str2.

Nach der Synchronisationsphase kann der Schalter S1 geschlossen werden. Der Stromrichter Str1 wird nicht weiter angesteuert.

Prinzipiell kann der Schalter S1 offen und der Stromrichter Str1 aktiv bleiben und ebenfalls in das Netz N einspeisen, wie in Fig. 4 durch die Verbindung zwischen Stromrichter Str1 und Netz N angedeutet ist. Prinzipiell können die Ausgänge beider Stromrichter Str1 und Str2 zur Einspeisung auch parallel geschaltet werden.

Die Leistung des Stromrichters Str1 ist in dieser Ausgestaltung vorzugsweise sehr viel kleiner, insbesondere mindestens vier mal kleiner als die des Stromrichters Str2. Vorzugsweise ist dann der Stromrichter Str1 nur während des Anlaufs aktiv. Wird Str1 mit zur Einspeisung genutzt, muss auch kein dreiphasiger Stromrichter verwendet werden.

Anstelle des Stromrichters Str1 aus Fig. 4 kann auch ein Widerstands-Chopper eingesetzt werden.

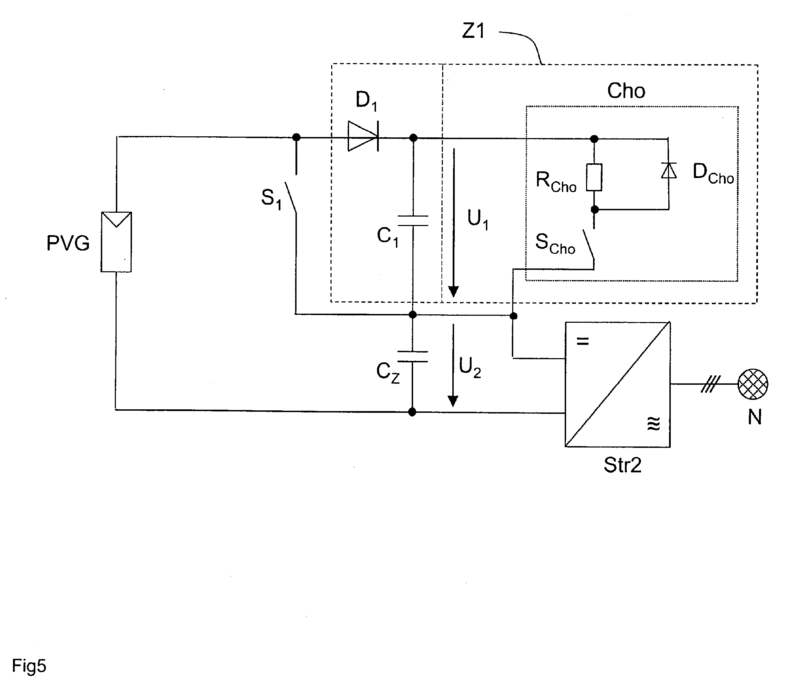

Fig. 5 zeigt eine entsprechende Anordnung mit einem kapazitiven Spannungsteiler mit Stromrichter und Widerstands-Chopper Cho, bestehend aus einem Widerstand RCho, einem Schalter SCho und einer Diode DCho. Die Diode DCho liegt antiparallel zum Widerstand Rcho und in Reihe zum Chopper-Schalter Scho, der ein getakteter Halbleiterschalter ist. Die Zusatzschaltung Z1 besteht dann aus der Diode D1, dem Kondensator C1 und dem Widerstands-Chopper Cho. Die Zusatzschaltung Z1 kann durch den Schalter S1 überbrückt werden.

In der Synchronisationsphase ist der Schalter S1 offen. Die Spannung U1 und damit das Verhältnis zwischen den Spannungen U1 und U2 wird durch den Widerstands-Chopper Cho eingestellt. Dabei nimmt die Spannung U2 nur Werte an, die ein vorgegebenes Maximum nicht übersteigen. Die Diode D1 verhindert dann einen Stromfluss in Richtung des Generators PVG. Nach der Synchronisationsphase wird S1 geschlossen, der Chopper Cho arbeitet dann nicht mehr.

Von Vorteil bei dieser Methode ist, dass der Chopper Cho wesentlich kleiner ausgelegt werden kann als ein Chopper Cho_Str2 parallel zum Eingang des Stromrichters Str2, wie in Fig.1 gezeigt ist. Dadurch sind auch die im Chopper Cho anfallenden Verluste geringer.

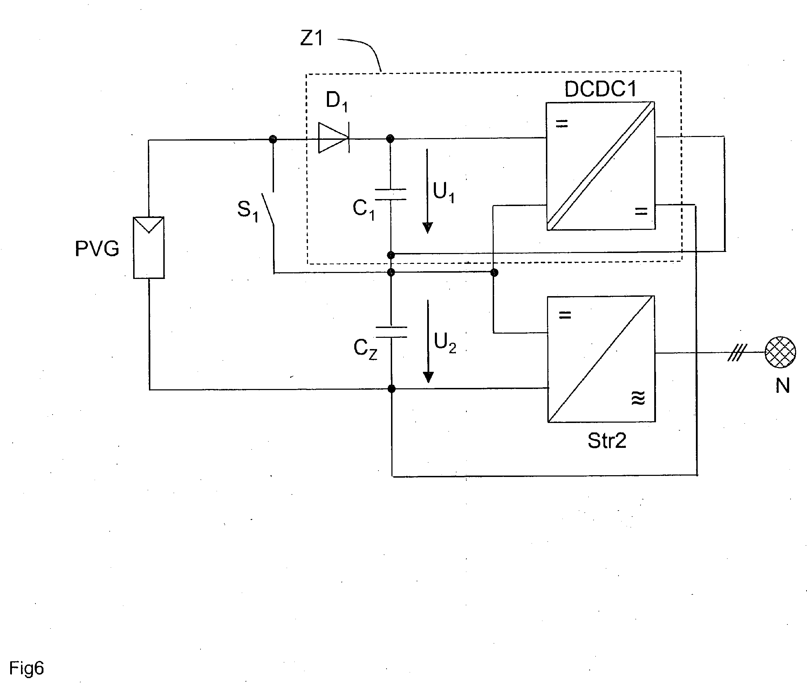

Fig. 6 zeigt eine Lösung mit einem galvanisch getrennten DC/DC-Wandler mit Rückspeisung in den Eingang. In dieser bevorzugten Ausgestaltung der Erfindung wird der Stromrichter Str1 nach Fig. 4 durch einen galvanisch getrennten DC/DC-Wandler DCDC1 ersetzt, dessen (+)-Ausgang mit dem (+)-Pol des Zwischenkreis-Kondensators CZ und dessen (-)-Ausgang mit dem (-)-Pol des Zwischenkreis-Kondensators CZ verbunden ist. Dadurch speist der DC/DC-Wandler DCDC1 in den Zwischenkreis-Kondensator CZ ein bzw. zurück. Die Zusatzschaltung Z1 besteht aus der Diode D1, dem Kondensator C1 und dem DC/DC-Wandler DCDC1 und kann durch den Schalter S1 überbrückt werden.

In der Synchronisationsphase ist der Schalter S1 offen, und der DC/DC-Wandler DCDC1 speist in den Kondensator CZ ein. Im Gegensatz zu den Lösungen mit dem Stromrichter Str1 nach Fig. 4 oder mit dem Chopper Cho nach Fig. 5 fallen Verluste nur für DC/DC Umwandlung an. Bei den Lösungen nach Fig. 4 und Fig. 5 wird die durch die Differenz zwischen Leerlauf- und MPP-Spannung anfallende Leistung ausschließlich in Verlustleistung im Stromrichter Str1 bzw. im Chopper Cho umgesetzt. Nach der Synchronisationsphase wird der Schalter S1 geschlossen. Der DC/DC-Wandler DCDC1 arbeitet dann nicht mehr.

Eine weitere nicht zur Erfindung gehörende Ausführungsform einer Stromrichteranordnung zeigt Fig. 7. Die Zusatzschaltung Z1 besteht hier aus einem Widerstand R1 und wird ergänzt durch eine weitere Zusatzschaltung Z2. Diese Zusatzschaltung Z2 besteht aus einer Reihenschaltung aus einem Widerstand R2 und einem Schalter S2. Während der Anlaufphase ist der Schalter S1 geöffnet, der Schalter S2 aber geschlossen. Die Widerstände R1 und R2 bilden nun einen ohmschen Spannungsteiler, so dass die Spannung U2 begrenzt wird. Nach erfolgtem Anlauf, d.h. wenn die Synchronisation abgeschlossen ist, wird der erste Schalter S1 geschlossen und der zweite Schalter S2 geöffnet. Die Ansteuerung des Hauptstromrichters Str2 erfolgt auch hierbei so, dass ein Pulsmuster im Moment, wo der eine Teil des Spannungsteilers überbrückt wird, so eingestellt wird, dass der Generator PVG stark genug belastet wird, damit die Spannung deutlich kleiner als die Leerlaufspannung ist. Die Spannung U2 entspricht der Eingangsspannung des Stromrichters Str2 und ist vor der Synchronisationsphase maximal, da während der Synchronisation die Spannung U2 sinkt (Leerlaufverlust).

Durch die je zwei zusätzlichen Widerstände R1, R2 und Schalter S1, S2, vorzugsweise mechanische Schalter, entstehen zusätzlicher Aufwand, Kosten, Platzbedarf, wobei aber nur der erste Schalter S1 stark belastet ist und nur während des Anlaufs, so dass Aufwand, Kosten, Platzbedarf den Nutzen rechtfertigen.

In den Widerständen wird zwar Leistung umgesetzt, die Verluste sind jedoch relativ klein, da nur Strom für die Synchronisation geführt werden muss. Mit dem ersten Schalter S1 ist im MPP-Betrieb dauerhaft ein zusätzliches Bauelement im DC-Kreis vorhanden. Von Vorteil ist aber der einfache Aufbau.

Die Erfindung ist nicht auf dieses Beispiel beschränkt. So ist klar, dass der in Fig. 1 beschriebene und gezeigte Grundaufbau mit Schaltorganen S_DC, S_AC, Filter Fi, und Trafo TrN mit einer Schaltung gemäß den Figuren 4 bis 6 kombiniert werden kann. Alternativ zum Überbrückungsschalter kann ein nicht überbrückender Schalter verwendet werden, der zum Beispiel als Umschalter ausgeführt ist und entweder auf den geteilten oder den ungeteilten Anschlusspunkt umschaltet. Der Schalter S1 hat in erster Linie die Aufgabe, die Zusatzschaltung Z1 zu aktivieren bzw. zu deaktivieren. Dieses muss nicht zwangsläufig durch Kurzschließen der Zusatzschaltung Z1 erfolgen.

### Bezugszeichenliste:

- PVG: Photovoltaikgenerator
- Str1: Hilfsstromrichter
- Str2: Hauptstromrichter
- CZ: Zwischenkreis-Kondensator
- Fi: Sinusfilterdrossel
- TrN: Trafo
- S_DC: DC-Schaltorgan
- S_AC: AC-Schaltorgan
- L1-L4: Schalter
- Cho_Str2: Widerstands-Chopper
- N: Netz
- Z1: erste Zusatzschaltung
- Z2: zweite Zusatzschaltung
- L: Drossel
- UN: Netzspannung
- UL_Fi: Filterdrosselspannung
- UAC_Str2: Stromrichterausgangsspannung
- S1: Überbrückungsschalter
- D1: Diode
- C1: Kapazität
- U1, U2: Eingangspannungen
- Cho: Widerstands-Chopper
- DCDC1: DC/DC-Wandler
- R1: erster Reihenwiderstand
- R2: zweiter Reihenwiderstand
- T1: Tiefsetzsteller-Schalter

## Patentansprüche

1. Stromrichteranordnung für die Umwandlung einer durch einen Photovoltaik-Generator (PVG) erzeugten Gleichspannung in eine Wechselspannung zur Einspeisung in ein Energieversorgungsnetz (N) mit dem Photovoltaik-Generator (PVG), einem Spannungs-Zwischenkreis, einem Hauptstromrichter (Str2) mit einer MPP-Regelung, bei der eine MPP-Spannung eingestellt wird, wobei mindestens eine spannungsbegrenzende Zusatzschaltung (Z1) vorhanden ist, die nur während der Anlaufphase des Generators (PVG) wirksam ist, wobei ein parallel zum Generator angeordneter Spannungsteiler vorhanden ist und die Eingangsspannung am Hauptstromrichter (Str2) während der Anlaufphase so begrenzt wird, dass die zulässige maximale MPP-Spannung am Hauptstromrichter (Str2) nicht überschritten wird,
**dadurch gekennzeichnet,**
**dass** der Spannungsteiler eine kapazitive Spannungsteilung zwischen der Spannung über der Zusatzschaltung (Z1) und der Eingangsspannung des Hauptstromrichters (Str2) nur während der Anlaufphase bewirkt, wobei der Spannungsteiler einen ersten Kondensator (C1) und einen in Reihe geschalteten Zwischenkreiskondensator (Cz) enthält, wobei ein Überbrückungsschalter (S1) in Reihe mit dem Hauptstromrichter (Str2) angeschlossen ist und eine Diode (D1) in Durchlassrichtung zwischen dem Überbrückungsschalter (S1) und dem Kondensator (C1) angeschlossen ist, einen Stromfluss in Richtung des Überbrückungsschalter (S1) verhindert und nur bei geöffnetem Überbrückungsschalter (S1) stromdurchflossen ist und die Zusatzschaltung (Z1) einen Hilfsstromrichter (Str1) oder einen Widerstands-Chopper (Cho) oder einen DC/DC-Wandler (DCDC1) mit galvanischer Trennung dessen Ausgang auf den Zwischenkreiskondensator (Cz) zurückgekoppelt ist umfasst.

2. Stromrichteranordnung nach Anspruch 1,
**dadurch gekennzeichnet,**
**dass** die Zusatzschaltung (Z1) mit dem Überbrückungsschalter (S1) verbunden ist, um die Zusatzschaltung (Z1) zu aktivieren oder zu deaktivieren.

3. Stromrichteranordnung nach Anspruch 2,
**dadurch gekennzeichnet,**
**dass** die Zusatzschaltung (Z1) mit dem Überbrückungsschalter(S1) verbunden ist, der während der Anlaufphase geöffnet und nach der Anlaufphase geschlossen ist und in einem Strompfad zwischen dem Generator und dem Hauptstromrichter (Str2) liegt sowie parallel zu mindestens einem Bauelement der Zusatzschaltung (Z1) angeschlossen ist.

4. Stromrichteranordnung nach Anspruch 2 oder3,
**dadurch gekennzeichnet,**
**dass** der Überbrückungsschalter (S1) ein mechanischer Schalter, insbesondere ein Schütz oder ein Relais ist.

5. Stromrichteranordnung nach einem der vorhergehenden Ansprüche,
**dadurch gekennzeichnet,**
**dass** die Zusatzschaltung (Z1) einen Hilfsstromrichter (Str1), insbesondere mit kleinerer Leistung als der Hauptstromrichter (Str2), umfasst, der nur während Anlaufphase aktiv ist.

6. Stromrichteranordnung nach Anspruch 5,
**dadurch gekennzeichnet,**
**dass** der Hilfsstromrichter (Str1) unmittelbar an das Netz (N) angeschlossen ist, so dass dieser direkt in das Netz einspeist.

7. Verfahren zur DC-AC-Spannungsumwandlung mit einer Stromrichteranordnung nach einem der vorhergehenden Ansprüche,
**dadurch gekennzeichnet,**
**dass** die Ausgangsspannung des Hauptstromrichters (Str2) während der Anlaufphase mit der Netzspannung synchronisiert wird und der Hauptstromrichter (Str2) nach erfolgter Synchronisation mit Hilfe eines AC-Schaltorgans (S_AC) mit dem Netz (N) verbunden wird.

8. Verfahren nach Anspruch 7,
**dadurch gekennzeichnet,**
**dass** ein Pulsmuster der Ansteuersignale für Halbleiterschalter des Hauptstromrichters (Str2) beim Zuschalten des Schalters (S1) so eingestellt wird, dass der Photovoltaik-Generator (PVG) so stark belastet wird, dass die DC-Quellspannung des Generators (PVG) auf einen Wert zusammenbricht, der höchstens der maximalen MPP-Spannung entspricht.

9. Verfahren nach Anspruch 7 oder 8,
**dadurch gekennzeichnet,**
**dass** nach erfolgter Synchronisation zwischen Ausgangsspannung des Hauptstromrichters (Str2) und der Netzspannung die Zusatzschaltung (Z1) durch den Überbrückungsschalter (S1) überbrückt wird.

## Claims

1. A power converter arrangement for converting a direct voltage generated by a photovoltaic generator (PVG) into an alternating voltage to be supplied to a grid (N) comprising the photovoltaic generator (PVG), a voltage intermediate circuit, a main power converter (Str2) with an MPP control setting an MPP voltage, wherein at least one voltage limiting additional circuit (Z1) is provided being effective only during a startup-phase of the generator (PVG), wherein a voltage divider is arranged in parallel to the generator and the main power converter's (Str2) input voltage is limited during the startup-phase so as to not exceed the maximum admissible MPP voltage at the main power converter (Str2), **characterized in that**
the voltage divider produces a capacitive voltage division between the additional circuit's (Z1) voltage and the input voltage of the main power converter (Str2) only during the startup-phase, wherein the voltage divider comprises a first capacitor (C1) and an intermediate circuit capacitor (Cz) connected in series, wherein a bypass switch (S1) is connected in series to the main power converter (Str2) and a diode (D1) is connected in forward direction between the bypass switch (S1) and the capacitor (C1) preventing a current flow towards the bypass switch (S1) and carrying a current only at open bypass switch (S1), and the additional circuit (Z1) comprises an auxiliary power converter (Str1) or a resistive chopper (Cho) or a DC/DC converter (DCDC1) with galvanic isolation, an output of which is coupled back to the intermediate circuit capacitor (Cz).

2. The power converter arrangement of claim 1,
**characterized in that**
the additional circuit (Z1) is connected to the bypass switch (S1) to activate or deactivate the additional circuit (Z1).

3. The power converter arrangement of claim 2,
**characterized in that**
the additional circuit (Z1) is connected to the bypass switch (S1), the bypass switch (S1) being open during the startup-phase and being closed after the startup-phase and being located in a current path between the generator and the main power converter (Str2) and being parallel connected to at least one component of the additional circuit (Z1).

4. The power converter arrangement of claim 2,
**characterized in that**
the bypass switch (S1) is a mechanical switch, in particular a disconnector or a relay.

5. The power converter arrangement of claim 2,
**characterized in that**
the additional circuit (Z1) comprises an auxiliary power converter (Str1), in particular with lower power than the main power converter (Str2), being active only during the startup-phase.

6. The power converter arrangement of claim 5,
**characterized in that**
the auxiliary power converter (Str1) is directly connected to the grid (N) so as to directly feed to the grid.

7. A method for DC-AC voltage conversion by a power converter arrangement of one of the preceding claims,
**characterized in that**
the main power converter's (Str2) output voltage is synchronized to the grid voltage during the startup-phase, and the main power converter (Str2) is connected to the grid (N) after synchronization using an AC connector (S_AC).

8. The method of claim 7,
**characterized in that**
a pulse pattern of control signals for semiconductor switches of the main power converter (Str2) is set during closure of the switch (S1), to load the photovoltaic generator (PVG) such that the DC source voltage of the generator (PVG) drops to a value corresponding in maximum to the maximum MPP voltage.

9. The method of claim 7 or 8,
**characterized in that**
after synchronisation of the main power converter's (Str2) output voltage to the grid voltage the additional circuit (Z1) is bypassed by the bypass switch (S1).

## Revendications

1. Agencement de convertisseurs pour la transformation d'une tension continue générée par un générateur photovoltaïque (PVG) en une tension alternative destinée à être alimentée dans un réseau d'alimentation en énergie (N) avec le générateur photovoltaïque (PVG), un circuit de tension intermédiaire, un convertisseur principal (Str2) avec une régulation MPP, pour laquelle est réglée une tension MPP, au moins un circuit supplémentaire (Z1) limitant la tension qui n'est actif que pendant la phase de démarrage du générateur (PVG) étant présent, un diviseur de tension placé à la parallèle du générateur étant présent et pendant la phase de démarrage, la tension d'entrée sur le convertisseur principal (Str2) étant limitée de telle sorte que la tension MPP maximale autorisée ne soit pas dépassée sur le convertisseur principal (Str2),
**caractérisé en ce que**
le diviseur de tension ne provoque une division de tension capacitive entre la tension sur le circuit supplémentaire (Z1) et la tension d'entrée du générateur principal (Str2) que pendant la phase de démarrage, le diviseur de tension contenant un premier condensateur (C1) et un condensateur de circuit intermédiaire (Cz) monté en série, un interrupteur de pontage (S1) étant raccordé en série avec le convertisseur principal (Str2) et une diode (D1) étant raccordée dans la direction de passage entre l'interrupteur de pontage (S1) et le condensateur (C1), empêchant un flux de courant dans la direction de l'interrupteur de pontage (S1) et n'étant irriguée par le courant que si l'interrupteur de pontage (S1) est ouvert et le circuit supplémentaire (Z1) comprenant un convertisseur auxiliaire (Str1) ou un hacheur de résistance (Cho) ou un transformateur DC/DC (DCDC1) avec séparation galvanique, dont la sortie est rétro-injectée sur le condensateur de circuit intermédiaire (Cz).

2. Agencement de convertisseurs selon la revendication 1, **caractérisé en ce que** le circuit auxiliaire (Z1) est relié avec l'interrupteur de pontage (S1), pour activer ou désactiver le circuit auxiliaire (Z1).

3. Agencement de convertisseurs selon la revendication 2, **caractérisé en ce que** le circuit auxiliaire (Z1) est relié avec l'interrupteur de pontage (S1), qui pendant la phase de démarrage est ouvert et après la phase de démarrage est fermé et se situe sur un trajet de courant entre le générateur et le convertisseur principal (Str2) et est raccordé à la parallèle d'au moins un composant du circuit auxiliaire (Z1).

4. Agencement de convertisseurs selon la revendication 2 ou la revendication 3, **caractérisé en ce que** l'interrupteur de pontage (S1) est un interrupteur mécanique, notamment un contacteur électromagnétique ou un relais.

5. Agencement de convertisseurs selon l'une quelconque des revendications précédentes, **caractérisé en ce que** le circuit auxiliaire (Z1) comprenant un convertisseur additionnel (Str1), notamment à puissance inférieure à celle du convertisseur principal (Str2), qui n'est actif que pendant la phase de démarrage.

6. Agencement de convertisseurs selon la revendication 5, **caractérisé en ce que** le convertisseur additionnel (Str1) est directement raccordé sur le réseau (N), de sorte qu'il alimente directement dans le réseau.

7. Procédé pour la conversion de tension DC-AC, avec un agencement de convertisseurs selon l'une quelconque des revendications précédentes, **caractérisé en ce que** pendant la phase de démarrage, la tension de sortie du convertisseur principal (Str2) est synchronisée avec la tension réseau et après la synchronisation, le convertisseur principal (Str2) est relié au réseau (N) à l'aide d'un organe de commutation AC (S_AC).

8. Procédé selon la revendication 7, **caractérisé en ce que** lors de la mise en circuit de l'interrupteur (S1), un modèle d'impulsions des signaux d'activation pour des interrupteurs à semi-conducteur du convertisseur principal (Str2) est réglé de telle sorte que le générateur photovoltaïque (PVG) soit chargé si fortement que la tension source DC du générateur (PVG) s'effondre à une valeur qui correspond au maximum à la tension MPP maximale.

9. Procédé selon la revendication 7 ou la revendication 8, **caractérisé en ce qu'**après la synchronisation entre la tension de sortie du convertisseur principal (Str2) et la tension réseau, le circuit auxiliaire (Z1) est ponté par l'interrupteur de pontage (S1).
